# FASCICULE DE BREVET EUROPEEN

(11) **EP 0 630 185 B1**
(45) Date de publication et mention de la délivrance du brevet: **18.06.1997**
(21) Numéro de dépôt: 94904210.5
(22) Date de dépôt: 07.01.1994
(51) Int. Cl.: A22B 5/00, A22C 21/06

(54) **PROCEDE ET DISPOSITIF DE DETOURAGE ET D'OBTURATION DE L'ORIFICE ANAL DES ANIMAUX DE BOUCHERIE APRES ABATTAGE**
VERFAHREN UND VORRICHTUNG ZUM HERAUSSCHNEIDEN UND ZUM ABDICHTEN DES AFTERS VON SCHLACHTTIEREN
METHOD AND DEVICE FOR CUTTING OUT AND PLUGGING THE ANAL ORIFICE OF SLAUGHTERED ANIMALS

(30) Priorité: 08.01.1993 FR 9300320; 08.11.1993 FR 9313594
(43) Date de publication de la demande: 28.12.1994
(73) Titulaire: Aubert, Georges, F-13360 Roquevaire (FR)
(72) Inventeur: Aubert, Georges, F-13360 Roquevaire (FR)
(74) Mandataire: Roman, Michel
(86) Numéro de dépôt international: FR9400021
(87) Numéro de publication internationale: WO9415471

(56) Documents cités:
- EP-A- 0 425 106
- EP-A- 0 457 408
- EP-A- 0 488 571
- WO-A-90/06685
- FR-A- 2 640 465
- US-A- 3 921 255

## Description

La présente invention a pour objet un procédé et un dispositif de détourage et d'obturation de l'orifice anal des animaux de boucherie après abattage.

Ils sont destinés à être mis en oeuvre dans les installations d'abattage de tous types, et en particulier dans les installations industrielles fonctionnant à des cadences élevées.

Les dispositifs de détourage anal réalisés à ce jour, par exemple celui décrit dans le brevet américain N° US 3 921 255, sont constitués d'un couteau cylindrique fermé à l'extrémité arrière ce qui ne permet pas un bon fonctionnement en mode automatique en raison des queues qui rentrent à l'intérieur et s'entassent au fond, n'ayant pas de débouché.

En outre, les Services d'Hygiène Vétérinaires de la Communauté Européenne exigent que l'orifice anal des animaux de boucherie soit obturé après abattage, afin d'empêcher que les matières contenues dans l'intestin puissent se répandre sur ou dans la carcasse. Les outils de détourage cités ci-dessus se prêtent mal à la réalisation d'une telle opération, qui se borne le plus souvent à la mise en place manuelle d'un obturateur, ce qui, en particulier dans les installations automatisées, nécessite d'augmenter la quantité de personnel nécessaire et élève par conséquent les coûts de productions.

Le brevet N° WO 90/06685 du même inventeur décrit un système automatique de distribution et de mise en place d'obturateurs anaux en matière plastique de forme creuse et conique, mis en place par le mandrin de centrage de l'outil de détourage du rectum. Ce système s'est révélé à l'usage incapable d'atteindre les cadences de travail des installations modernes les plus performantes. Du document EP-A-0 488 571 est connu l'injection d'une substance adhésive durcissante comme cyanoacrylate dans le rectum.

Les obturateurs anaux connus, quelle que soit la méthode de pose utilisée, ne sont pas d'une étanchéité absolue et il arrive que leur fixation ne résiste pas aux manipulations ultérieures subies par les carcasses.

Le procédé selon la présente invention supprime tous ces inconvenients. En effet, il permet non seulement l'évacuation immédiate des morceaux de queue s'étant introduit dans le couteau de détourage, supprimant ainsi les arrêts de l'installation nécessaires auparavent pour vider périodiquement ledit couteau, mais également de procéder automatiquement a l'obturation de l'orifice anal a des cadences très élevées, tout en assurant une étanchéité totale et en supprimant le risque d'ouverture accidentelle.

Ce procédé consiste a procéder d'abord au détourage du rectum de l'animal au moyen d'un outil de détourage puis à injecter dans l'anus de la graisse broyée à l'aide d'un dispositif de mise en pression contrôlé par les équipements d'automatismes de l'installation, ce dispositif étant relié par un conduit flexible à un canal interne du mandrin de centrage de l'outil de détourage du rectum.

Le dispositif pour mettre en oeuvre ce procédé est décrit par les caractérisques de la revendication 3. Dans une mode de réalisation préférée l'outil de détourage est un couteau cylindrique monté autour du mandrin de centrage et pourvu d'ouvertures latérales permettant l'évacuation immédiate de tous les déchets pouvant se loger dans ledit couteau.

Sur les dessins annexés, donnés à titre d'exemple non limitatif d'une des formes de réalisation de l'objet de l'invention:
la figure 1 représente un poste de chaîne d'abattage industriel équipé d'un outil de détourage du rectum à couteau cylindrique avec ouvertures latérales, et d'un dispositif d'injection de graisse,
la figure 2 est une vue de côté agrandie du couteau monté sur mandrin de centrage avec les ouvertures d'évacuation des déchets ouvertes,
la figure 3 montre le couteau vu de dessus avec les dites ouvertures fermées, et
la figure 4 est une coupe transversale suivant les flèches A-A de la figure précédente.

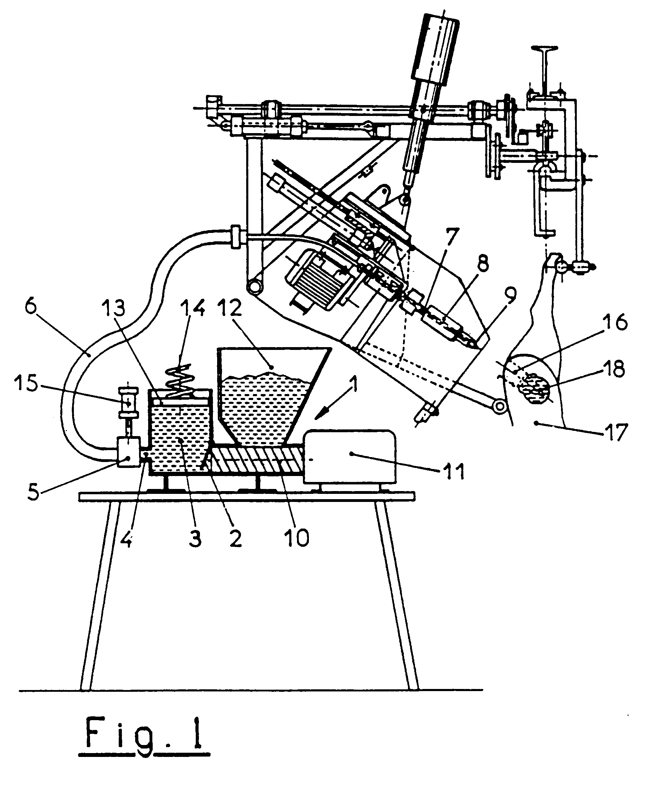

Le dispositif, figure 1, est composé d'un broyeur 1 débitant par l'intermédiaire d'un clapet anti-retour 2 dans une chambre de mise en pression 3 dont la sortie 4 est contrôlée par un clapet motorisé 5.

Un conduit flexible 6 relie ledit clapet à un canal interne 7 axial prévu à cet effet dans le mandrin de centrage 9 de l'outil de détourage 8 du rectum, et aboutissant à l'extrémité du nez de ce mandrin.

Le broyeur 1 sera avantageusement constitué d'une vis 10 tournant dans un fourreau, entraînée par un moteur électrique 11 et alimenté par une trémie 12, ledit fourreau se terminant par le clapet anti-retour 2 susmentionné.

La chambre de mise en pression 3 peut se présenter sous la forme d'un cylindre fermé par un piston mobile 13 sur lequel une force soigneusement déterminée est exercée par un ressort 14 ou tout autre moyen adéquat.

Le clapet motorisé 5 sera ouvert automatiquement, par exemple au moyen d'un vérin 15, pneumatique ou hydraulique, ou par un électro-aimant, lorsque le nez du mandrin de centrage 9 a pénétré dans le rectum 16 de l'animal 17 en cours de traitement.

La graisse broyée, maintenue en permanence sous une pression suffisante dans la chambre 3, sera alors injectée dans ledit rectum de manière à former un bouchon 18 de graisse s'infiltrant dans tous les interstices et assurant une fermeture absolument étanche.

La graisse utilisée sera avantageusement celle retirée des animaux traités eux-mêmes. Ce produit est généralement considéré comme rebut et jeté ou remis à titre non onéreux à diverses industries. Elle pourra d'ailleurs être récupérée à la fin des opérations d'abattage et suivre le circuit habituel, le fait qu'elle soit broyée ne pouvant que faciliter sa manutention.

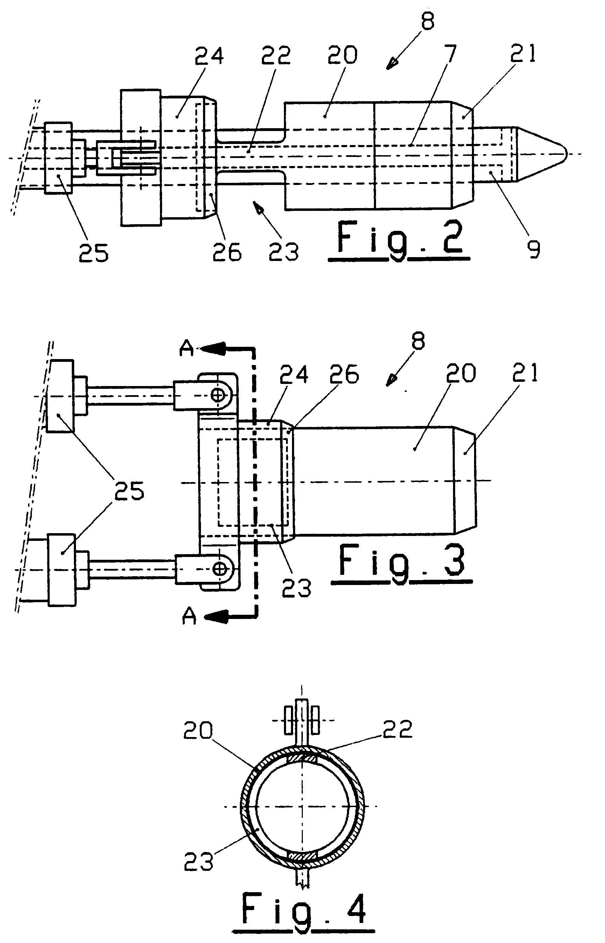

L'outil de détourage 8, figures 2 à 4, est constitué d'un un couteau 20 cylindrique à lame circulaire 21 monté autour du mandrin de centrage 9.

La partie arrière de la paroi cylindrique est interrompue et fixée sur le corps du couteau par des entretoises longitudinales 22, de manière à former des ouvertures latérales 23 permettant l'évacuation immédiate de tous les déchets se logeant dans le couteau lors de son fonctionnement, et en particulier des morceaux de queues.

Les ouvertures 23 pourront avantageusement être réalisées par découpe de la paroi cylindrique du couteau 20.

Un manchon cylindrique 24 externe peut coulisser axialement sur la paroi du couteau de manière à obturer ou au contraire dégager les ouvertures 23. Le déplacement de ce manchon est provoqué par deux vérins 25 ou tout autre dispositif adéquat équivalent, contrôlé ou non par les organes d'automatismes de l'installation. La fermeture est commandée lors de la pénétration de l'outil de détourage 8 dans le rectum 16 de l'animal 17, l'ouverture ayant lieu aussitôt que le couteau est ressorti.

Le manchon 24 sera avantageusement fabriqué dans une matière plastique ayant des propriétés autolubrifiantes et comportera un bord avant 26 aminci pour faciliter la pénétration dans le corps de l'animal de l'ensemble mobile formé par le mandrin de centrage 9, le couteau 20 et ledit manchon.

Grâce à sa fiabilité, à sa vitesse de fonctionnement et à son faible coût de revient, le dispositif qui vient d'être décrit se prète particulièrement bien à l'équipement d'installations d'abattage de tous types, et tout particulièrement des installations à hautes performances.

Le positionnement des divers éléments constitutifs donne à l'objet de l'invention un maximum d'effets utiles qui n'avaient pas été, à ce jour, obtenus par des systèmes similaires.

## Revendications

1. procédé d'obturation de l'orifice anal des animaux de boucherie après abattage, destiné en particulier à être mis en oeuvre dans une installation industrielle d'abattage fonctionnant à des cadences élevées, comprenant le détourage du rectum avec un outil de détourage (8), caractérisé en ce que l'on injecte dans le rectum (16) de l'animal (17) de la graisse broyée, à l'aide d'un dispositif de mise en pression (3) contrôlé par un clapet motorisé (5) apte à être piloté par les équipements d'automatismes de l'installation, et relié par un conduit flexible (6) à un canal interne (7) axial prévu à cet effet dans le mandrin de centrage (9) de l'outil de détourage (8) du rectum, et aboutissant à l'extrémité du nez de ce mandrin, ledit clapet motorisé étant ouvert lorsque ledit mandrin de centrage a pénétré dans le rectum, de manière à former un bouchon (18) de graisse s'infiltrant dans tous les interstices et assurant une fermeture absolument étanche.

2. Procédé selon la revendication 1, se caractérisant par le fait que la graisse utilisée est celle retirée des animaux traités eux-mêmes.

3. Dispositif d'obturation de l'orifice anal des animaux de boucherie après abattage, comprenant un outil de détourage (8) pour l'application du procédé selon les revendications précédentes, se caractérisant par le fait qu'il est composé d'un broyeur (1) débitant par l'intermédiaire d'un clapet anti-retour (2) dans une chambre de mise en pression (3) dont la sortie (4) est contrôlée par un clapet motorisé (5) apte à être piloté par les équipements d'automatismes de l'installation, et relié par un conduit flexible (6) à un canal interne (7) axial prévu dans le mandrin de centrage (9) de l'outil de détourage (8) du rectum, et aboutissant à l'extrémité du nez de ce mandrin pour injection dans le rectum de l'animal (17) de la graisse broyée.

4. Dispositif selon la revendication 3, se caractérisant par le fait que le broyeur (1) est constitué d'une vis (10) tournant dans un fourreau, entraînée par un moteur électrique (11) et alimentée par une trémie (12), ledit fourreau se terminant par le clapet anti-retour (2).

5. Dispositif selon l'une quelconque des revendications 3 et 4, se caractérisant par le fait que la chambre de mise en pression (3) se présente sous la forme d'un cylindre fermé par un piston mobile (13) sur lequel une force soigneusement déterminée est exercée par un ressort (14) ou un autre moyen.

6. Dispositif selon la revendication 3, se caractérisant par le fait que l'outil de détourage (8) est constitué d'un couteau (20) cylindrique à lame circulaire (21) dont la paroi comporte à l'arrière des ouvertures latérales (23) permettant en permanence l'évacuation des déchets indésirables, lesdites ouvertures étant obturables durant la pénétration de l'outil de détourage dans le rectum (16) de l'animal (17), grâce à un manchon cylindrique (24) externe pouvant coulisser axialement sur la paroi du couteau (20).

7. Dispositif selon la revendication 6, se caractérisant par le fait que les ouvertures latérales (23) de la paroi du couteau (20) sont réalisées par interruption de ladite paroi, cette dernière étant fixée sur le corps du couteau par des entretoises longitudinales (22).

8. Dispositif selon la revendication 6, se caractérisant par le fait que les ouvertures latérales (23) de la paroi du couteau sont réalisées par découpe de ladite paroi.

9. Dispositif selon l'une quelconque des revendications 6 à 8, se caractérisant par le fait que le manchon cylindrique (24) comporte un bord avant (26) aminci.

10. Dispositif selon l'une quelconque des revendications 6 à 9, se caractérisant par le fait que le manchon cylindrique (24) est fabriqué dans une matière plastique ayant des propriétés autolubrifiantes.

11. Dispositif selon l'une quelconque des revendications 6 à 10, se caractérisant par le fait que le déplacement du manchon cylindrique (24) est provoqué par des moyens contrôlés par les organes d'automatismes de l'installation d'abattage.

12. Dispositif selon l'une quelconque des revendications 6 à 11, se caractérisant par le fait que le déplacement du manchon cylindrique (24) est provoqué par deux vérins (25).

## Claims

1. Process for plugging the anal orifice of animals for consumption after slaughter, in particular for use in industrial slaughter installations operating at high work rate including routing of the rectum with routing tool (8),
characterized in that ground greases are injected into the rectum (16) of the animal (17) using a pressurizing device (3) controlled by a motor-driven valve (5) capable of being operated by the installation automation equipment and connected by a flexible pipe (6) to an axial internal canal (7) provided to this effect in the centring mandrel (9) of the rectum routing tool (8) and terminating at the end of the mandrel nose, the said motor-driven valve being opened when the said centring mandrel penetrates into the rectum so as to form a plug (18) of grease which infiltrates all the spaces and ensures total seal.

2. Process as per claim 1 characterized in that the grease used is that withdrawn from the treated animals themselves.

3. Device for plugging the anal orifice of animals for consumption after slaughter including a routing tool (8) for the application of the process according to the aforesaid claims, characterized in that it consists of a grinder (1) discharging through a non-return valve (2) into a pressurizing chamber (3) whose outlet (4) is controlled by a motor-driven valve (5) capable of being piloted by the installation automation equipment and connected by a flexible pipe (6) to an axial internal channel (7), provided in the centring mandrel (9) of the rectum routing tool (8) and terminating at the end of the nose of this mandrel, for injecting ground grease into the rectum of the animal (17).

4. Device as per claim 3 characterized in that the grinder unit (1) consists of a screw (10) rotating in a sheath driven by an electric motor (11) and fed from a hopper (12), the said sheath terminating by a non-return valve (2).

5. Device as per any one of the claims 3 and 4 characterized in that the pressurizing chamber (3) takes the form of a cylinder closed by a mobile piston (13) on which a carefully determined force is exercised by a spring (14) or other means.

6. Device as per claim 3 characterized in that the routing tool (8) consists of a cylindrical knife (20) with circular blade (21) whose wall is equipped with side openings (23) to allow permanent evacuation of undesirable waste, the said openings being plugged during penetration of the routing tool into the rectum (16) of the animal (17) using an external cylindrical sleeve (24) which can slide axially on the wall of the knife (20).

7. Device as per claim 6 characterized in that the knife wall (20) side openings (23) are executed by an interruption of the said wall, this latter being fixed on the body of the knife by longitudinal spacers (22).

8. Device as per claim 6 characterized in that the side openings (23) of the knife wall are executed by cutting out sections of the said wall.

9. Device as per any one of claim 6 to 8, characterized in that the cylindrical sleeve (24) comprises a bevelled front edge (26).

10. Device as per any one of claims 6 to 9 characterized in that the cylindrical sleeve (24) is manufactured from a plastic material having self-lubricating properties.

11. Device as per any one of claims 6 to 10 characterized in that movement of the cylindrical sleeve (24) is caused by devices controlled by the automation systems of the slaughter installation.

12. Device as per any one of claim 6 to 11 characterized in that the cylindrical sleeve (24) is moved by two hydraulic cylinders (25).

## Patentansprüche

1. Verfahren zum Verschließen der Analöffnung von Schlachtvieh nach dem Abschlachten, im besonderen bestimmt zur Anwendung in einer industriellen Schlachtanlage mit hohen Arbeitsleistungen, bestehend aus dem Ausschneiden des Rektums mit einem Ausschneidewerkzeug (8), dadurch gekennzeichnet, daß in das Rektum (16) des Tieres (17) vermahlenes Fett eingespritzt wird mit Hilfe einer Druckbeaufschlagungsvorrichtung (3), betätigt durch ein motorisiertes Ventil (5), geeignet von den automatisierten Ausrüstungen der Anlage gesteuert zu werden und durch eine flexible Leitung (6) mit einem axialen, internen Kanal (7) verbunden, der zu diesem Zweck in dem Zentrierbolzen (9) des Rektumausschneidewerkzeugs (8) vorgesehen ist und am Ende der Nase dieses Bolzens endet, wobei das besagte motorisierte Ventil geöffnet ist, wenn der besagte Zentrierbolzen in das Rektum eingeführt ist, um einen Stopfen (18) aus Fett zu bilden, das in alle Falten eindringt und einen absolut dichten Verschluß gewährleistet.

2. Verfahren gemäß Anspruch 1, dadurch gekennzeichnet, daß das verwendete Fett den behandelten Tieren selbst entnommen wird.

3. Vorrichtung zum Verschließen der Analöffnung von Schlachtvieh nach dem Abschlachten, ein Ausschneidewerkzeug (8) aufweisend für die Anwendung des Verfahrens gemäß den vorhergehenden Ansprüchen, dadurch gekennzeichnet, daß sie aus einer Mühle (1) besteht, die durch eine Rückschlagklappe (2) in einer Druckbeaufschlagungskammer (3) endet, deren Ausgang (4) durch ein motorisiertes Ventil (5), geeignet zur Steuerung durch die automatisierten Ausrüstungen der Anlage, betätigt wird, durch eine flexible Leitung (6) mit einem axialen, internen Kanal (7) im Zentrierbolzen (9) des Rektumausschneidewerkzeugs (8) verbunden ist und in das Ende der Nase dieses Bolzens mündet, zum Einspritzen von gemahlenem Fett in das Rektum des Tieres (17).

4. Vorrichtung gemäß Anspruch 3, dadurch gekennzeichnet, daß die Mühle (1) aus einer in einer Hülle drehenden Schnecke (10) besteht, angetrieben von einem Elektromotor (11) und gespeist durch einen Trichter (12), wobei die besagte Hülle durch eine Rückschlagklappe (2) abgeschlossen wird.

5. Vorrichtung gemäß irgendeinem der Ansprüche 3 und 4, dadurch gekennzeichnet, daß die Druckbeaufschlagungskammer (3) die Form eines durch einen mobilen Kolben (13) verschlossenen Zylinders aufweist, auf den eine sorgfältig bestimmte Kraft durch eine Feder (14) oder ein anderes Organ ausgeübt wird.

6. Vorrichtung gemäß Anspruch 3, dadurch gekennzeichnet, daß das Ausschneidewerkzeug (8) aus einem zylindrischen Messer (20) mit runder Schneide (21) besteht, dessen Wand hinten seitliche Öffnungen (23) aufweist zur Evakuation von unerwünschten Abfällen, wobei die besagten Öffnungen während der Penetration des Ausschneidewerkzeugs in das Rektum (16) des Tieres (17) geschlossen werden können mit Hilfe eines externen zylindrischen Überschiebrohrs (24), das in axialer Richtung an der Wand des Messers (20) gleiten kann.

7. Vorrichtung gemäß Anspruch 6, dadurch gekennzeichnet, daß die seitlichen Öffnungen (23) in der Wand des Messers (20) durch Unterbrechung der besagten Wand realisiert sind und die letztere auf dem Körper des Messers durch längsseitige Abstandhalter (22) befestigt ist.

8. Vorrichtung gemäß Anspruch 6, dadurch gekennzeichnet, daß die seitlichen Öffnungen (23) der Wand des Messers durch Stanzen der gesagten Wand realisiert sind.

9. Vorrichtung gemäß irgendeinem der Ansprüche 6 bis 8, dadurch gekennzeichnet, daß das zylindrische Überschiebrohr (24) eine verdünnte Vorderkante (26) aufweist.

10. Vorrichtung gemäß irgendeinem der Ansprüche 6 bis 9, dadurch gekennzeichnet, daß das zylindrische Überschiebrohr (24) aus einem Kunststoff mit selbstschmierenden Eigenschaften hergestellt ist.

11. Vorrichtung gemäß irgendeinem der Ansprüche 6 bis 10, dadurch gekennzeichnet, daß die Bewegung des zylindrischen Überschiebrohrs (24) durch von den Automatikorganen der Schlachtungsanlage betätigten Mitteln verursacht wird.

12. Vorrichtung gemäß irgendeinem der Ansprüche 6 bis 11, dadurch gekennzeichnet, daß die Bewegung des zylindrischen Überschiebrohrs (24) durch zwei Stellzylinder (25) verursacht wird.
